**Europäisches Patentamt**

**European Patent Office**

**Office européen des brevets**

(19)

(11) Veröffentlichungsnummer : **0 358 000 B1**

(12)

# EUROPÄISCHE PATENTSCHRIFT

(45) Veröffentlichungstag der Patentschrift :
**14.10.92 Patentblatt 92/42**

(51) Int. Cl.$^5$ : **A63H 27/08**

(21) Anmeldenummer : **89114992.4**

(22) Anmeldetag : **14.08.89**

(54) **Lenkdrachen.**

(30) Priorität : **07.09.88 DE 8811274 U**

(43) Veröffentlichungstag der Anmeldung :
**14.03.90 Patentblatt 90/11**

(45) Bekanntmachung des Hinweises auf die
Patenterteilung :
**14.10.92 Patentblatt 92/42**

(84) Benannte Vertragsstaaten :
**BE CH DE FR GB IT LI NL**

(56) Entgegenhaltungen :
**EP-A- 0 194 013**
**FR-A- 2 639 247**
**GB-A- 2 098 946**

(73) Patentinhaber : **Schimmelpfennig, Wolfgang**
**Kätnerweg 28**
**W-2000 Hamburg 65 (DE)**

(72) Erfinder : **Schimmelpfennig, Wolfgang**
**Kätnerweg 28**
**W-2000 Hamburg 65 (DE)**

(74) Vertreter : **Schulmeyer, Karl-Heinz, Dr.**
**Kieler Strasse 59a**
**W-2087 Hasloh (DE)**

EP 0 358 000 B1

**Beschreibung**

Die Erfindung betrifft einen vom Boden aus lenkbaren Spiel-Sport-Drachen nach dem von Peter Powell populär gemachten Prinzip der Lenkung mit mindestens zwei Steuerleinen und mit den von Jalbert eingeführten luftgefüllten sogenannten Parafoil-Tragflügeln aus Rip-Stop-Nylon. Vom Boden aus durch zwei Leinen, die gleichzeitig als Halte- wie auch als Steuerleinen dienen, gelenkte Spiel-Sport-Drachen sind unter dem Namen Flexifoil bekannt. Die besondere Kurvenform des Tragflügels, vor allem seiner Vorderkante, die für seine Flugfähigkeit und Manövrierbarkeit von entscheidender Bedeutung ist, wird bei diesen bekannten Lenkdrachen durch ein entsprechend geformtes mehrteiliges starres Gestänge gewährleistet, das in eine in der Vorderkante angebrachte Tasche eingesteckt und zusammengesetzt wird, dessen Mittelteil zylindrisch ausgebildet ist, während die Außenteile nach außen konisch verjüngt verlaufen.

Auch ist bekannt, dem Tragflügel durch eine in der Tasche der Vorderkante untergebrachte Versteifung aus leichterem und weicherem Material als Metall, z.B. Styropor die nötige Formstabilität zu verleihen.

Die vorliegende Erfindung betrifft einen Spiel-Sport-Drachen, dessen Tragflügel völlig frei von Versteifungen irgendwelcher Art ist. Außer der dadurch erzielten Gewichtsreduktion gegenüber bekannten Konstruktionen werden damit weitere Vorteile erzielt, wie z.B. bessere Transportierbarkeit, verbesserte Flugeigenschaften, insbesondere die Möglichkeit, engere Kurven zu fliegen sowie die durch den Fortfall der bisher für die Unterbringung der Versteifung nötig gewesene Tasche ermöglichte Ersparnis an Herstellungskosten, die den Mehraufwand für erfindungsgemäß notwendige zusätzliche Leinen erheblich mehr als wettmacht.

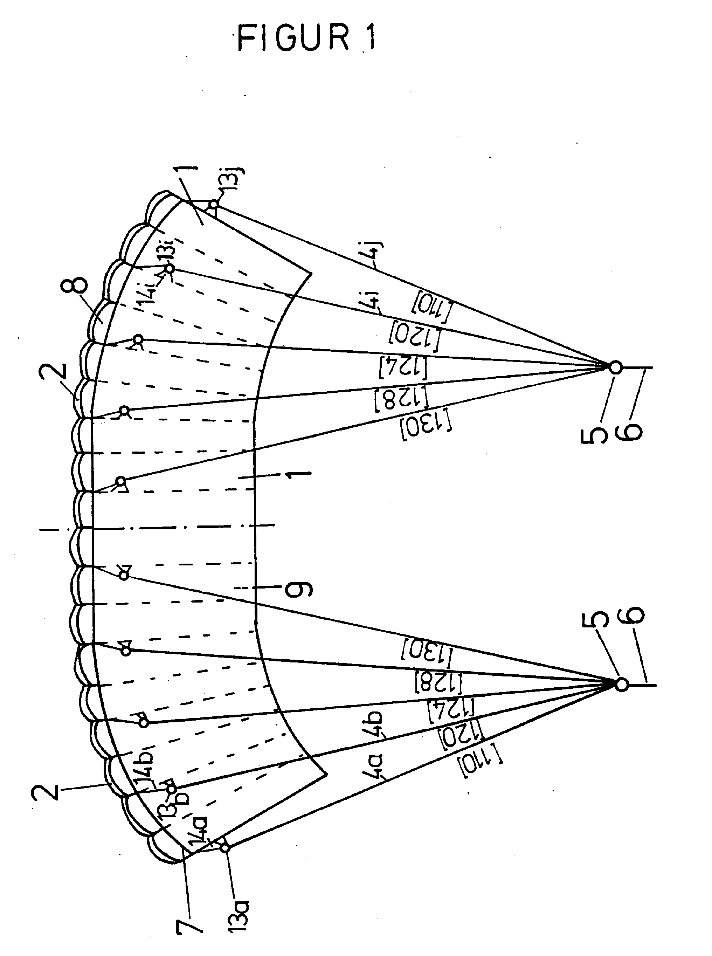

Ermöglicht wird dieser technische Fortschritt durch die Anwendung des Prinzips einer in anderem Zusammenhang bekannten Leinenführung auf Spiel-Sport-Drachen, das für den neuartigen Verwendungszweck entsprechend abgewandelt wurde. Dieses für Gleitfallschirme bekannte Prinzip besteht im Wesentlichen darin, die Kurvenform 7 des in Bezug auf die (in Figur 1 beispielsweise strichpunktiert eingezeichnete) Längsachse symmetrischen luftgefüllten Tragflügels ohne jede materielle Versteifung ausschließlich durch Abstimmung der mindestens zum größten Teil verschiedenen Längen diverser, an verschiedenen Punkten des Tragflächenbodens entweder direkt oder über Zwischenbefestigungen befestigten Waageleinen zweier zueinander symmetrischer Leinenbündel aufeinander festzulegen und zu stabilisieren. Bei den bekannten Gleitfallschirmen sind die zum Steuern dienenden Waageleinen getrennt von den zum Tragen der Nutzlast (z.B. des Fallschirmspringers) dienenden Waageleinen geführt und ebenso getrennt von diesen ausschließlich am hinteren Teil des Tragflächenbodens befestigt wie in GB-A- 2 098 946.

Im Gegensatz dazu sind beim erfindungsgemäßen Spiel-Sport-Drachen die Waageleinen, die ja neuerungsgemäß keine Nutzlast zu tragen haben, als strahlenförmig von den Endpunkten der Steuerleinen ausgehende Bündel ausgebildet, die sowohl zum Steuern wie auch zum Stabilisieren des Tragflügels dienen.

Gemäß einer bevorzugten Ausgestaltung der Erfindung sind die Angriffspunkte der Waageleinen nicht gleichmäßig über den Boden des Tragflügels verteilt, sondern greifen bevorzugt und vorzugsweise ausschließlich in seinem vorderen Bereich und vor allem an der Vorderkante bzw. in deren unmittelbarer Nähe an. Im rückwärtigen Bereich und vor allem in den hinteren 50 bis 60% und mehr, z.B. 75 - 80% der Tragflügelfläche sind also weniger und vorzugsweise überhaupt keine Waageleinen befestigt.

Vorzugsweise greifen die Waageleinen nicht direkt am Tragflächenboden an sondern sind in an sich bekannter Weise mit diesem durch vorzugsweise dreiecksförmige Zwischenbefestigungen verbunden. Solche aus dreieckigen Stoffstücken bestehende Zwischenbefestigungen sind unter dem Namen Kiele an sich bekannt. Ebenso ist es bekannt, einen Teil dieser Stoffdreiecke durch dreieecksförmig angeordnete Leinen zu ersetzen. Gemäß einer weiteren bevorzugten Ausgestaltung der Erfindung wird aber nicht nur ein Teil dieser Kiele, sondern ihre Gesamtheit durch dreiecksförmig angeordnete Leinen ohne Stoffbespannung ersetzt.

Nachstehend sind zwei Ausführungsformen A und B der Erfindung an Hand der Figuren 1 bis 4 einerseits und 5 bis 9 andereseits näher erläutert.

Die Figuren 1 und 5 sind perspektivische Ansichten der beiden verschiedenen Ausführungsformen.

Die Figuren 2 und 6 sind die entsprechenden Unteransichten der Figuren 1 und 5, in denen übersichtlichkeitshalber die Waageleinen ausgelassen sind.

Die Figuren 3 und 7 sind Schnitte längs der Linien III - III und VII - VII der Figuren 2 und 6.

Die Figuren 4 und 8 sind Schnitte längs der Linien IV - IV und VIII - VIII der Figuren 2 und 6.

Figur 9 ist ein Schnitt längs der Linie IX - IX der Figur 6.

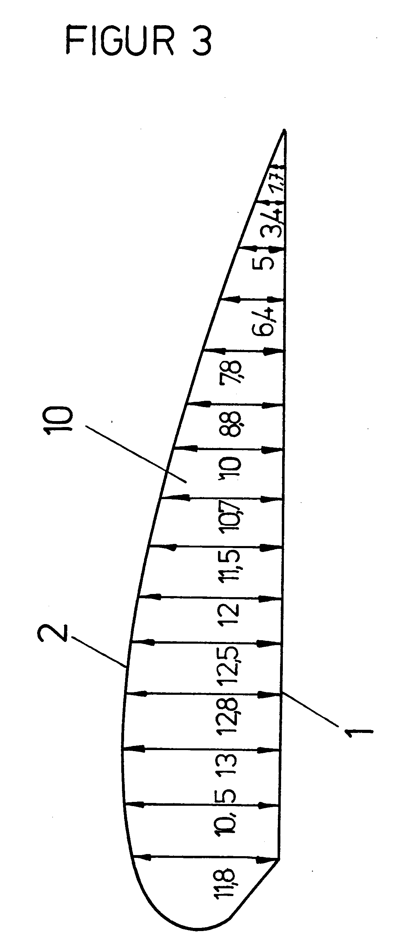

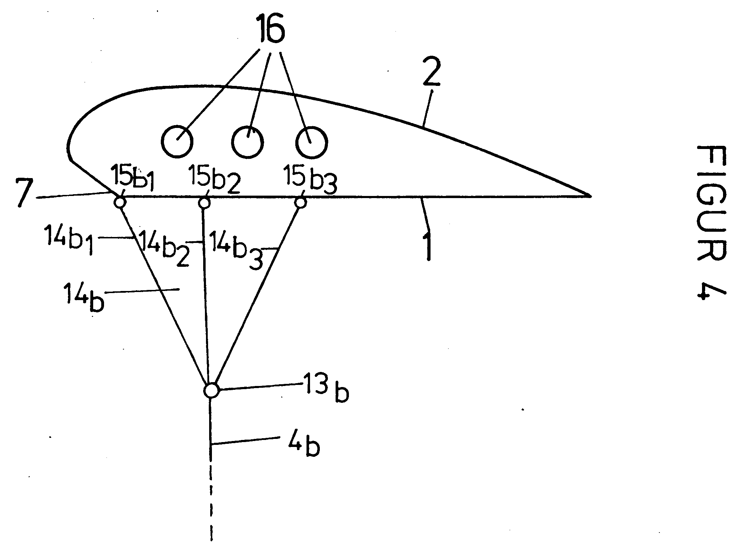

In den Figuren bedeutet 1 den Boden und 2 die Decke des erfindungsgemäßen Tragflügels. An dessen Vorderkante 7 sind die Lufteintrittsöffnungen 8 angeordnet, durch die im Betrieb Luft in die Kammern 9 einströmt. Das räumliche Profil des Tragflügels wird in an sich bekannter Weise von den verschiedenen Höhen der Kammerwände 10 festgelegt. Zum Druckausgleich zwischen den einzelnen Kammern sind zweckmäßig in an sich bekannter Weise Öffnungen 16 in den Kammerwänden 10 angebracht, die nur in Figur 4, aber übersichtlichkeitshalber nicht auch in Figur 3 dargestellt sind. Zur Verdeutlichung sind im dargestellten Spezialfall der Figur 3 die Dimensionen der Kammerwände angegeben.

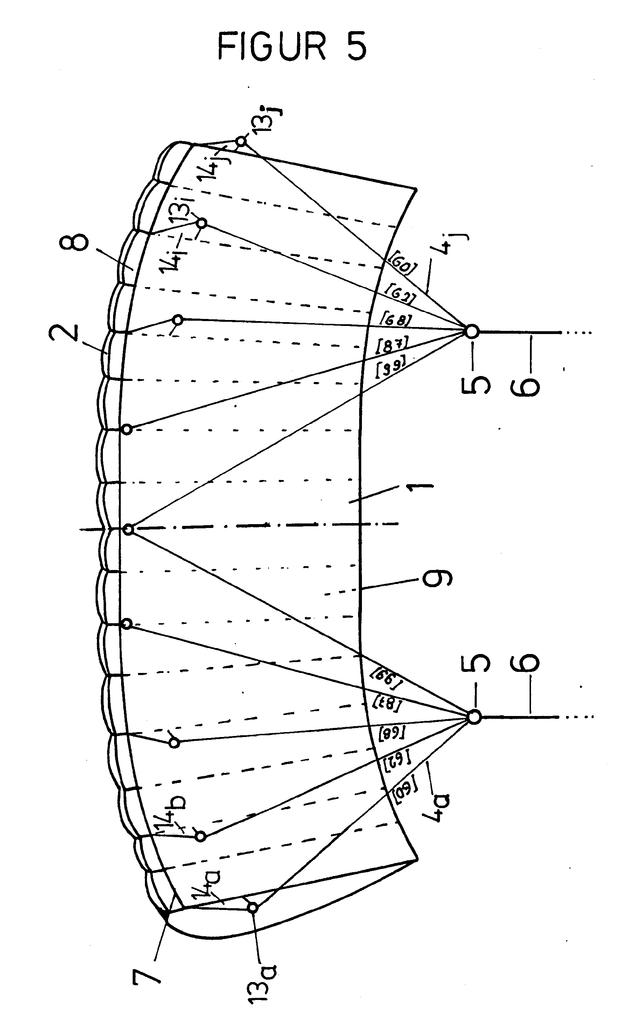

Aus den Figuren, besonders den Figuren 1 und 5, ist ersichtlich, daß von den Endpunkten 5 der Steuerleinen 6 die Waageleinen 4a, 4b, 4c .....in zwei zueinander symmetrischen Bündeln strahlenförmig ausgehen. An deren Endpunkten 13a, 13b ..... greifen die Zwischenbefestigungen 14a, 14b ..... an. Gemäß der dargestellten bevorzugten Ausführungsform der Erfindung werden diese von den Verbundwaagen ( aus mindestens zwei Leinen bestehende Leinensysteme, die von einem Punkt ausgehend sich strahlenförmig auf mehrere, d.h. mindestens zwei Angriffspunkte verteilen) der Leinen $14b_1$, $14b_2$ und $14b_3$ gebildet, die an den Punkten $15b_1$, $15b_2$ und $15b_3$ des Bodens 1 angreifen.

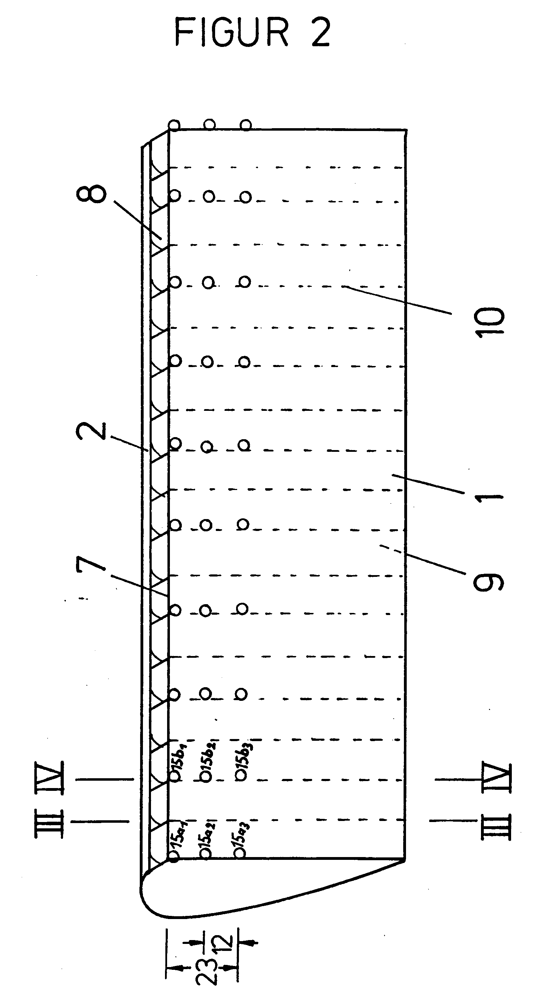

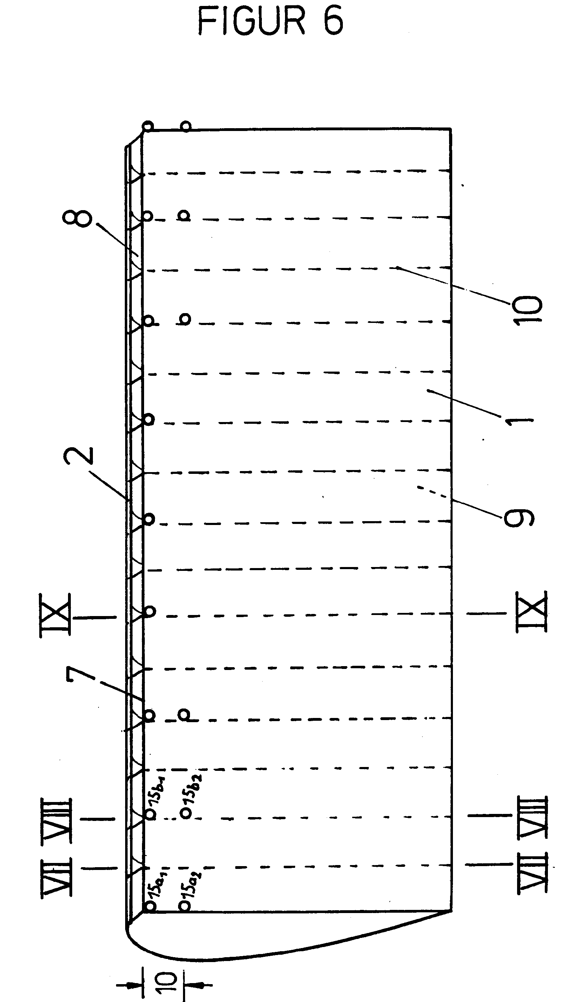

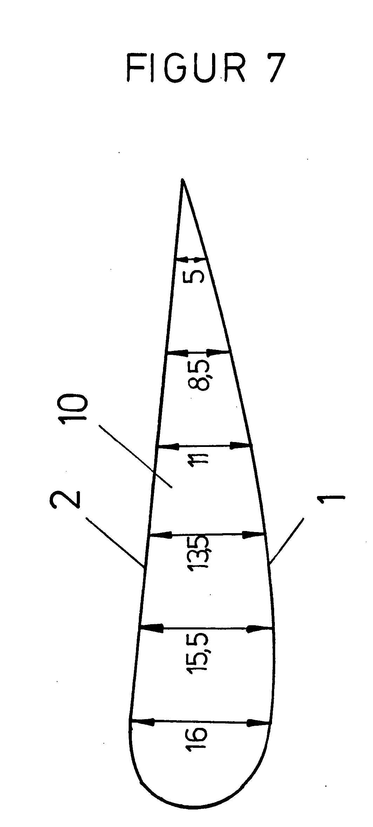

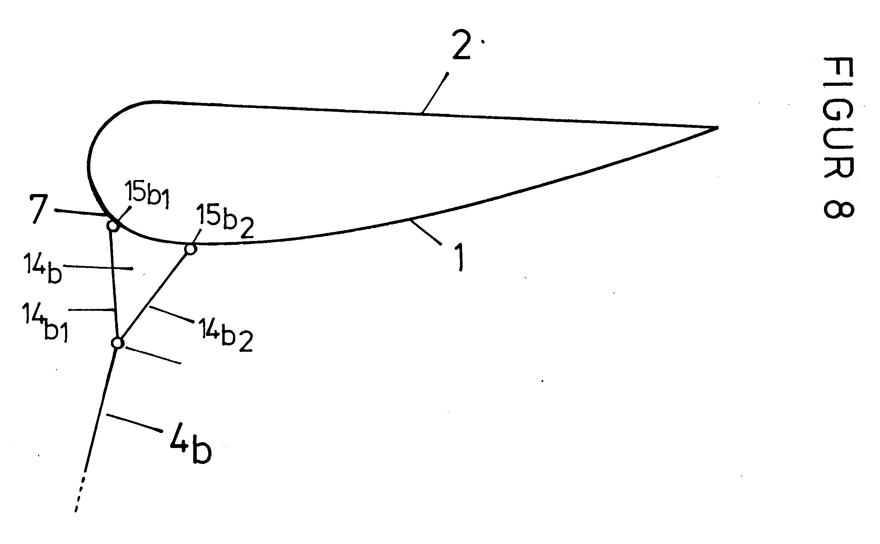

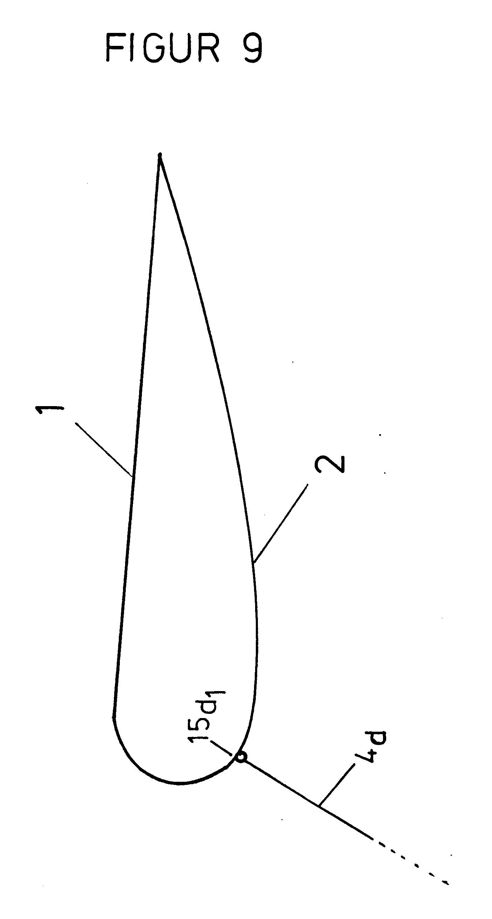

Unterschiede zwischen den Ausführungsförmen A (Fig. 1 - 4) und B (Fig. 5 - 9) bestehen darin, daß bei der Ausführungsform B die dritten Leinen $14a_3$ bis $14j_3$ der Verbundwaagen fortfallen; im mittleren Bereich die beiden innersten Waageleinen 4e und 4f ohne Zwischenschaltung einer Verbundwaage an einem Punkt der Vorderkante gemeinsam angreifen; die nächstäußeren Waageleinen 4d und 4g ohne Verbundwaage direkt an der Vorderkante des Bodens angreifen; die Anzahl der Kammern verschieden sind (18 bei A, 16 bei B); die Verbindungslöcher (16) bei B entfallen; die Profile (vgl. Fig 3 und 7) verschieden sind und auch die Krümmungen der Vorderkanten kleinere Unterschiede aufweisen.

Wesentlich für die Flugleistung und Manövrierbarkeit des erfindungsgemäßen Drachens ist in jedem Falle vor allem die richtige Krümmung der Vorderkante 7 und damit des gesamten Lenkdrachens, die erfindungsgemäß durch die richtige Abstimmung der verschiedenen Längen der Waageleinen 4a, 4b ..... zwischen den Punkten 5 und 13a, 13b ..... definiert und aufrechterhalten wird. Im dargestellten Beispiel sind diese verschiedenen Längen (vgl. Fig. 1) in eckigen Klammern eingetragen. Die Längen der verschiedenen Waageleinen sollten zweckmäßig von der Seitenkante in Richtung Mitte zunehmen, wobei die Längenzunahme in der gleichen Richtung sowohl zu- wie auch abnehmen kann.

**Patentansprüche**

1. Vom Boden aus steuerbarer Lenkdrachen mit luftgefülltem Tragflügel und Lufteintrittsöffnungen (8) an der Vorderkante (7), mindestens zwei Steuerleinen (6) und mehreren Waageleinen (4) sowie gegebenenfalls zwischen den Endpunkten der Waageleinen (4) und dem Boden (1) des Tragflügels angeordneten Zwischenbefestigungen (14) wie z.B. Kielen, dadurch gekennzeichnet, daß von mindestens zwei Steuerleinen (6) zwei zueinander symmetrische Bündel von Waageleinen (4a,4b....) ausgehen, deren verschiedene Längen so aufeinander abgestimmt sind, daß durch das Zusammenwirken der von den verschieden langen Waageleinen ausgeübten Zugkräfte ohne Zuhilfenahme irgendwelcher Versteifungen die Kurvenform des Tragflügels und insbesondere seiner Vorderkante (7) definiert und im Betrieb aufrechterhalten wird, wobei die Endpunkte ($15a_1$, $15a_2$, $15a_3$ ; $15b_1$, $15b_2$, $15b_3$....) der Zwischenbefestigungen (14a, 14b....) selbst ausschließlich oder vorwiegend im vorderen Bereich des Tragflügels befestigt sind.

2. Lenkdrachen nach Anspruch 1, dadurch gekennzeichnet, daß alle Zwischenbefestigungen (14a, 14b .....) zwischen den Waageleinen (4a, 4b .....) und dem Boden (1) des Tragflügels (1) aus Verbundwaagen ($14a_1$, $14a_2$, $14a_3$; $14b_1$, $14b_2$, $14b_3$ .....) ohne Stoffbespannung bestehen.

3. Lenkdrachen nach Anspruch 1, dadurch gekennzeichnet, daß der hintere Bereich des Tragflügels, an dem keine Waageleinen (4a, 4b .....) und/oder Zwischenbefestigungen (14a, 14b .....) angreifen, mindestens 50% und vorzugsweise etwa 75 bis 80% seiner Fläche ausmacht.

4. Lenkdrachen nach den Ansprüchen 1 bis 3, dadurch gekennzeichnet, daß die zwischen den Befestigungspunkten (5) der Waageleinenbündel (4a, 4b .....) an den Steuerleinen (6) und ihren Befestigungspunkten (13a, 13b .....) an den Zwischenbefestigungen (14a, 14b .....) bzw. bei Fortfall der Zwischenbefestigungen an ihren Befestigungspunkten (15a, 15b ....) am Boden (1) des Tragflügels gemessenen Längen der Waageleinen (4a, 4b .....) von der Tragflügelkante zu ihrer Mitte hin zunimmt.

5. Lenkdrachen nach Anspruch 4, dadurch gekennzeichnet, daß die Längenzunahme der Waageleinen (4a, 4b .....) von außen nach innen hin abnimmt.

6. Lenkdrachen nach Anspruch 5, dadurch gekennzeichnet, daß die Längenzunahme der Waageleinen von außen nach innen etwa im Verhältnis 110 : 120 : 126 : 128 : 130 erfolgt.

## Claims

1. Dirigible kite, controllable from the ground, with air-filled wing and air-entry apertures (8) at the front edge (7), at least two control lines (6) and several balance lines (4) and intermediate securing elements (14) such as e.g. keels optionally arranged between the end-points of the balance lines (4) and the base (1) of the wing, characterized in that two bundles of balance lines (4a, 4b.... ), symmetrical to each other, start from at least two control lines (6), the different lengths of the said bundles being so matched to one another that, through the interaction of the tensile forces exerted by the balance lines of different lengths, the curve shape of the wing and in particular of its front edge (7) is defined and maintained in operation without the help of any reinforcements whatsoever, the end-points ($15a_1$, $15a_2$, $15a_3$; $15b_1$, $15b_2$, $15b_3$....) of the intermediate securing elements (14a, 14b....) being themselves secured exclusively or predominantly in the front zone of the wing.

2. Dirigible kite according to claim 1, characterized in that all intermediate securing elements (14a, 14b ....) between the balance lines (4a, 4b ....) and the base (1) of the wing (1) consist of compound balances ($14a_1$, $14a_2$, $14a_3$; $14b_1$, $14b_2$, $14b_3$....) without material covering.

3. Dirigible kite according to claim 1, characterized in that the rear zone of the wing, from which no balance lines (4a, 4b .... ) and/or intermediate securing elements (14a, 14b ...) start, accounts for at least 50% and preferably ca. 75 to 80% of its surface area.

4. Dirigible kite according to claims 1 to 3, characterized in that the lengths of the balance lines (4a, 4b....), measured between the securing points (5) of the balance-line bundles (4a, 4b....) at the control lines (6) and their securing points (13a, 13b....) at the intermediate securing elements (14a, 14b...) or, if there are no intermediate securing points, at their securing points (15a, 15b....) at the base (1) of the wing, increase from the wing edge to its centre.

5. Dirigible kite according to claim 4, characterized in that the increase in length of the balance lines (4a, 4b ....) decreases from the outside inwards.

6. Dirigible kite according to claim 5, characterized in that the increase in length of the balance lines takes place from the outside inwards approximately in the ratio 110:120:126:128:130.

## Revendications

1. Cerf-volant dirigeable commandé depuis le sol, avec aile porteuse remplie d'air et avec orifices d'entrée d'air (8) sur le bord avant (7), au moins deux câbles de commande (6) et plusieurs câbles d'équilibrage (4) ainsi qu'éventuellement des attaches intermédiaires (14) disposées entre les points extrêmes des câbles d'équilibrage (4) et la base (1) de l'aile porteuse, comme par exemple des dérives, **caractérisé en ce que** d'au moins deux câbles de commande (6) partent des grappes mutuellement symétriques de câbles d'équilibrage (4a, 4b ...), dont les différentes longueurs sont réglées les unes sur les autres que l'action conjointe des forces de traction exercées par les câbles d'équilibrage de longueurs différentes détermine et maintient sans aide d'aucune sorte un raidissement du profil de l'aile porteuse et en particulier de son bord avant (7), les points extrêmes ($15a_1$, $15a_2$, $15a_3$; $15b_2$, $15b_1$, $15b_3$ ...) des attaches intermédiaires (14a, 14b ...) étant eux-mêmes fixés exclusivement ou principalement à la partie avant de l'aile porteuse.

2. Cerf-volant dirigeable selon la revendication 1, **caractérisé en ce que** toutes les attaches intermédiaires (14a, 14b ... ) situées entre les câbles d'équilibrage (4a, 4b ...) et la base (1) de l'aile porteuse consistent en compensateurs de liaison ($14a_1$, $14a_2$, $14a_3$; $14b_1$, $14b_2$, $14b_3$ ...) non placés sous tension.

3. Cerf-volant dirigeable selon la revendication 1, **caractérisé en ce que** la partie arrière de l'aile porteuse, à laquelle ne se raccordent aucun câble d'équilibrage (4a, 4b ...) et/ou aucune attache intermédiaire (14a, 14b ...) constitue au moins 50 % et de préférence de 75 à 80 % environ de la superficie de l'aile porteuse.

4. Cerf-volant dirigeable selon les revendications 1 à 3, **caractérisé en ce que** la longueur des câbles d'équilibrage (4a, 4b ...), mesurée entre d'une part les points d'attache (5) des grappes de câbles d'équilibrage (4a, 4b ...) aux câbles de commande (6) et d'autre part leurs points d'attache (13a, 13b ...) aux attaches intermédiaires (14a, 14b ...), et en cas de présence de fixations intermédiaires, à leurs points d'attache (15a, 15b ...), augmente depuis le bord avant de l'aile porteuse, en direction du milieu de cette dernière.

5. Cerf-volant dirigeable selon la revendication 4, **caractérisé en ce que** l'augmentation de la longueur des câbles d'équilibrage (4a, 4b ...) augmente de l'extérieur vers l'intérieur.

6. Cerf-volant dirigeable selon la revendication 5, **caractérisé en ce que** l'augmentation de longueur des câbles d'équilibrage de l'extérieur vers l'intérieur s'effectue dans la proportion approximative de 110 : 120 : 126 : 128 : 130.

# FIGUR 1

# FIGUR 3

# FIGUR 4

# FIGUR 5

# FIGUR 6

# FIGUR 7

EP 0 358 000 B1

# FIGUR 8

13

# FIGUR 9